# EUROPÄISCHE PATENTSCHRIFT

(11) **EP 3 312 592 B1**
(45) Veröffentlichungstag und Bekanntmachung des Hinweises auf die Patenterteilung: **02.10.2024**
(21) Anmeldenummer: 17184327.9
(22) Anmeldetag: 01.08.2017
(51) Int. Cl.: G01N 21/90, G01N 21/88, G01N 21/51, G01N 21/21, G01N 15/1433, G01N 15/1434, G01N 15/00, G01N 15/14

(54) **VORRICHTUNG UND VERFAHREN ZUR DETEKTION VON LUFTBLASEN IN EINEM MIT FLÜSSIGKEIT BEFÜLLTEN BEHÄLTER**
DEVICE AND METHOD FOR DETECTING AIR BUBBLES IN A CONTAINER FILLED WITH LIQUID
DISPOSITIF ET PROCÉDÉ DE DÉTECTION DE BULLES D'AIR DANS UN RÉCIPIENT REMPLI DE LIQUIDE

(30) Priorität: 21.10.2016 DE 102016012585
(43) Veröffentlichungstag der Anmeldung: 25.04.2018
(73) Patentinhaber: Körber Pharma Inspection GmbH, 85570 Markt Schwaben (DE)
(72) Erfinder: Halbinger, Werner, 85586 Poing (DE); Ziegler, Marc, 81671 München (DE); Böhme, Andreas, 85586 Poing (DE); Ripke, Lennart, 84036 Landshut (DE)
(74) Vertreter: Laufhütte, Dieter

(56) Entgegenhaltungen:
- EP-A1- 0 429 086
- EP-A2- 2 295 100
- CH-A5- 681 748
- DE-A1- 102010 012 570
- DE-A1- 102012 205 311
- DE-A1- 102014 006 496
- US-A1- 2013 316 934

## Beschreibung

Die vorliegende Erfindung betrifft eine Vorrichtung zur Detektion von Luftblasen in einem mit Flüssigkeit befüllten Behälter sowie ein hierauf gerichtetes Verfahren. Vollautomatische auf Bildverarbeitung basierende Inspektionssysteme werden in einer Vielzahl von technischen Bereichen, wie beispielsweise der pharmazeutischen Industrie, der Getränkeindustrie oder auch der Halbleiterindustrie eingesetzt, um fehlerhafte Produkte zu erkennen und sie aus dem weiteren Produktionsprozess, wie zum Beispiel Verpackung, Abfüllung oder Auslieferung, auszuschleusen.

Das genannte Bildverarbeitungssystem umfasst in der Regel einen oder mehrere optische Sensoren (z. B. CCD/CMOS-Kameras) und ist mit weiteren optischen Komponenten (z. B. Linsen), Signalleitungen, sowie einer rechnergestützten Auswertungseinheit für die vom Sensor aufgenommenen analogen oder digitalen Signale ausgestattet.

Bei der Inspektion von transparenten Behältern (beispielsweise Spritzen, Vials, Ampullen) mit flüssigen, ebenfalls transparenten Produkten sind Luftblasen in der Regel die Hauptursache für Falschausschuss (False Reject, FR). Als Falschausschluss wird dabei die irrtümliche Einordnung eines eigentlich korrekten Produkts als fehlerhaft bezeichnet, was zur Entnahme aus dem Herstellungsprozess führt. Dabei kann es sich um aufsteigende/bewegliche Luftblasen im Flüssigkeitsvolumen oder anhaftende Luftblasen an der Innenwand des Behälters handeln. Die Luftblasen können fälschlicherweise als Partikel, Verschmutzung, Einschluss, Kratzer oder Risse (usw.) interpretiert werden. Luftblasen können während der Abfüllung durch das mechanische Handling oder durch interne (chemisch-physikalische) Prozesse entstehen. Die Menge an Luftblasen und deren Verweildauer können stark variieren, abhängig von den Eigenschaften des Produkts. Die Anwesenheit von Luftblasen während der Inspektion hat somit zur Folge, dass entweder die Sensitivität der Inspektion eingeschränkt oder der Falschausschuss erhöht ist. Beides, der durch die Fehlinterpretation entstehende Falschausschuss bzw. potentielle "Rückläufer", die bspw. bei einer Prüfung auf Abnehmerseite entstehen, können zu erheblichen Zusatzkosten für das produzierende Unternehmen führen.

Bisherige Ansätze zur Unterscheidung von Luftblasen und Defekten beziehen sich fast ausschließlich auf die Vermessung der Objekte. Hierbei werden Eigenschaften wie "Rundheit", "Größe" oder "Ausdehnung" verwendet. Diese funktionieren aber nur unzuverlässig und erlauben somit keine eindeutige Unterscheidung. Unabhängig davon sind verschiedene Ansätze zur Vermeidung von Luftblasen oder deren Entfernung gängig, die aber schnell an ihre Grenzen stoßen bzw. die Kosten einer Anlange mitunter stark erhöhen.

Aus den EP 2 295 100 A2 und DE 10 2012 205 311 A1 sind optische Vorrichtungen bekannt, mittels welchen in Behältern befindliche Flüssigkeiten optisch inspiziert und Inhomogenitäten wie z.B. Luftblasen detektiert werden können. Die Behälter werden dabei mittels mehrerer Lichtquellen unterschiedlicher Wellenlängen bestrahlt sowie Abbildungen der Flüssigkeiten erfasst und analysiert, wobei die Lichtstrahlen der verschiedenen Lichtquellen parallel zueinander verlaufen.

Die EP 0 429 086 A1 offenbart eine Inspektionsvorrichtung mit einer Dunkelfeldbeleuchtung, welche eine oder mehrere Lichtquellen umfassen kann. Zusätzlich kann dabei die Möglichkeit vorgesehen sein, einen für die Dunkelfeldbeleuchtung nicht verwendeten Bereich der Beleuchtungseinheit als zusätzliche Lichtquelle für eine Hellfeldbeleuchtung einzusetzen, welche sich in ihren Eigenschaften von der Dunkelfeldbeleuchtung hinschtlich der Farbe oder Polarisation unterscheidet.

DE 10 2010 012570 A1 offenbart eine Vorrichtung zum Inspizieren von befüllten Behältnissen mit einer ersten Strahlungseinrichtung, welche Strahlung auf die in dem Behältnis befindlich zu untersuchende Flüssigkeit richtet, mit einer Bildaufnahmeeinrichtung, welche wenigstens einen Teil der von der ersten Strahlungseinrichtung auf die Flüssigkeit gerichteten und von dem Behältnis reflektierten oder gestreuten Strahlung aufnimmt, wobei die Bildaufnahmeeinrichtung zur Aufnahme eines ortsaufgelösten Bildes ausgelegt ist, wobei die Vorrichtung wenigstens eine weitere Strahlungseinrichtung oder eine weitere Bildaufnahmeeinrichtung aufweist, wobei die Strahlungseinrichtungen und die Bildaufnahmeeinrichtung derart angeordnet sind, dass eine Beobachtung der Flüssigkeit unter wenigstens zwei voneinander unterschiedlichen Bildaufnahmepfaden erfolgt.

Daher ist es das Ziel der vorliegenden Erfindung eine Vorrichtung bzw. ein Verfahren vorzusehen, das die vorgenannten Nachteile des Standes der Technik überwindet. Dies gelingt mit einer Vorrichtung, die sämtliche Merkmale des Anspruchs 1 aufweist oder mit einem Verfahren nach Anspruch 12.

Die erfindungsgemäße Vorrichtung zur Detektion von Luftblasen in einem mit Flüssigkeit befüllten Behälter umfasst dabei eine Beleuchtungseinheit zum Bestrahlen des Behälters mit Licht, und eine Aufzeichnungseinheit zum Aufzeichnen einer Abbildung des durch die Beleuchtungseinheit bestrahlten Behälters, wobei die Beleuchtungseinheit mindestens zwei Lichtquellen umfasst, die sich in ihrer spektralen Lichtfarbe und/oder ihrer Polarisation und/oder einer anderen optischen Eigenschaft voneinander unterscheiden.

Erfindungsgemäß umfasst die Vorrichtung ferner eine Auswerteeinheit, die dazu ausgelegt ist, bei einer Auswertung der Abbildung der Aufzeichnungseinheit aufgrund einer spezifischen Anordnung der von den Lichtquellen abgegebenen, voneinander unterscheidbaren Lichtstrahlen auf das Vorhandensein einer Luftblase zu schließen.

Weiter ist erfindungsgemäß vorgesehen, dass die Lichtstrahlen der mindestens zwei

Lichtquellen in einem Inspektionsbereich für einen Behälter nicht parallel zueinander verlaufen. Vielmehr weisen die zu einer jeweiligen Lichtquelle gehörigen Strahlenbündel einen Winkel zu jedem der anderen Strahlenbündel der anderen Lichtquellen auf. Vorzugsweise ist dieser Winkelversatz der

Strahlenbündel der mindestens zwei Lichtquellen nur in einer gemeinsamen Ebene vorhanden.

Mithilfe der Beleuchtungseinheit, deren einzelne Lichtquellen spektral kodiert oder durch ihre Polarisation voneinander unterscheidbar sind, ist es möglich, Luftblasen in einer von einem Behälter aufgenommenen Flüssigkeit zuverlässig zu erkennen. Grund hierfür ist, dass Luftblasen in einem Flüssigkeitsvolumen kugelförmig oder - wenn sie an der Seitenwand anhaften- halbkugelförmig sind. Dann wirken die Luftblasen wie Konkavlinsen unterschiedlicher Größe und Brennweite. Im Gegensatz dazu wirken schwer von Luftblasen unterscheidbare Glaspartikel, insbesondere Glaskugeln wie Konvexlinsen, sodass die voneinander unterscheidbaren Lichtstrahlen der mindestens zwei Lichtquellen der Beleuchtungseinheit in Abhängigkeit davon, ob sie durch einen Glaspartikel oder eine Luftblase treten in entgegengesetzte Richtung abgelenkt werden. Begründet ist dies durch die jeweils unterschiedlichen Verhältnisse der optischen Dichten zueinander, also Luft (n_{L}=1), Wasser (n_{W}=1,33) und Glas (n_{G}=1,5).

Dieser Effekt kann bei der Beurteilung, ob eine Luftblase oder ein Fremdpartikel wie ein Glaskörper in der Flüssigkeit enthalten ist, durch die mindestens zwei Lichtquellen, die sich in ihrer spektralen Lichtfarbe und/oder ihrer Polarisation voneinander unterscheiden, ausgenutzt werden.

Erfindungsgemäß ist die Aufzeichnungseinheit so positioniert, dass die von den mindestens zwei Lichtquellen ausgehenden Lichtstrahlen bei einem Passieren des Behälters, der frei von Luftblasen oder anderen Fremdpartikeln ist, nicht in den Aufzeichnungsbereich der Aufzeichnungseinheit dringen oder eine kontinuierliche bzw. gleichmäßige Intensität in dem Aufzeichnungsbereich aufweisen.

In anderen Worten verfehlen die von den zwei Lichtquellen ausgesandten Lichtstrahlen z.B. die Aufzeichnungseinheit, wenn diese nicht durch Fremdpartikel in der Flüssigkeit des Behälters abgelenkt werden. Ausnahmen ergeben sich hierbei für die Randbereiche des Behälters, da auch die Bodenfläche eines Behälters oder der Verschluss zu einem Ablenken der Lichtstrahlen der mindestens zwei Lichtquellen in die Aufzeichnungseinheit hineinführen kann.

Treffen dann die die Aufzeichnungseinheit normalerweise verfehlenden Strahlen auf eine Luftblase oder einen Glaspartikel, so erfolgt bei einer Luftblase zwingend eine Ablenkung hierdurch in Richtung der Aufzeichnungseinheit, womit das Vorhandensein einer Luftblase oder eines Glaspartikels erkennbar ist. In einem Folgeschritt ist dann möglich, das Vorhandensein einer Luftblase zu erkennen. Wie bereits vorstehend erläutert wird hierzu die Eigenschaft einer Luftblase in einer Flüssigkeit ausgenutzt, wonach diese wie eine Konkavlinse wirkt. Mithilfe der zwei voneinander unterscheidbaren Lichtquellen sowie deren spezifischer Einfallswinkel auf den Inspektionsbereich, in dem ein zu untersuchender Behälter angeordnet ist, kann dann auf das Vorhandensein einer Luftblase geschlossen werden.

Für die vorstehenden Überlegungen ist es nicht zwingend erforderlich, dass die Strahlengänge der mindesten zwei Lichtquellen das Aufzeichnungsfeld der Aufzeichnungseinheit bei der Inspektion eines Behälters, der frei von Luftblasen oder Fremdpartikel ist, verfehlen da ein eventuelles Ablenken der Lichtstrahlen, das durch Luftblasen oder andere Partikel (beispielsweise Glaspartikel) erfolgt sich in einer detektierbaren Intensitätserhöhung von Lichtstrahlen der mindestens zwei Lichtquellen niederschlägt.

Wie bereits oben erläutert, wirkt eine Luftblase in Flüssigkeit wie eine Konkavlinse und führt so zu einer spezifischen Ablenkung der Lichtstrahlen der
mindestens zwei

Lichtquellen, was von der Auswerteeinheit detektiert wird. So ist es möglich auf das Vorhandensein einer Luftblase zu schließen.

Nach einer optionalen Modifikation der Erfindung umfasst die Beleuchtungseinheit drei Lichtquellen, die sich in Ihrer spektralen Lichtfarbe und/oder ihrer Polarisation voneinander unterscheiden.

Nach einer Fortbildung der Erfindung ist die Aufzeichnungseinheit eine Farbkamera und/oder eine Kamera mit einem oder mehreren Polarisationsfiltern. So ist es möglich, gleichzeitig oder aufeinanderfolgend die Lichtstrahlen der mehreren Lichtquellen aufzunehmen und diese Information einer Auswerteeinheit zukommen zulassen. Auch zeitlich kurz hintereinander gemachte Aufnahmen bspw. durch verschiedene Polfilter können zur Auswertung verwendet werden.

Erfindungsgemäß ist der Behälter zwischen Beleuchtungseinheit und Aufzeichnungseinheit anordenbar und die Beleuchtungseinheit und die Aufzeichnungseinheit sind einander zugewandt, vorzugsweise um eine Durchlichtbeleuchtung des Behälters vorzunehmen.

Bei einer Durchlichtbeleuchtung ist es typisch, dass ein Teil des von der Beleuchtungseinheit ausgehenden Lichts durch den Behälter verläuft und erst dann die Aufzeichnungseinheit erreicht.

Vorzugsweise umfasst die Vorrichtung eine Linse, die in dem Strahlengang von der Beleuchtungseinheit zu der Aufzeichnungseinheit angeordnet ist und dazu ausgelegt ist, die Lichtstrahlen der mindestens zwei Lichtquellen der Beleuchtungseinheit mehr oder weniger parallel auf einen Inspektionsbereich eines Behälters zu lenken. Dabei kann vorgesehen sein, dass die Linse eine Zylinderlinse, eine Fresnel-Linse und/oder Fresnel-Zylinderlinse ist.

Durch das Vorsehen einer Linse ist es möglich, mehrere voneinander räumlich beabstandete Lichtquellen vorzusehen, deren Lichtstrahlen mithilfe der Linse auf einen gemeinsamen Inspektionsbereich gerichtet werden, in dem sämtliche Lichtstrahlen der verschiedenen Lichtquellen entsprechend den oben ausgeführten Modifikationen vorhanden sind. Dabei ist also möglich, dass die Lichtstrahlen der jeweiligen Lichtquellen im Inspektionsbereich nicht parallel zueinander verlaufen sondern zusammen einen Winkel einschließen.

Nach einer bevorzugten Ausführungsform der vorliegenden Erfindung ist genau eine der mindestens zwei Lichtquellen im Brennpunkt der Linse angeordnet, wobei die restlichen Lichtquellen der Beleuchtungseinheit beabstandet hiervon auf derselben Seite der Linse wie die im Brennpunkt angeordnete Lichtquelle angeordnet sind. Vorzugsweise sind die anderen Lichtquellen von der im Brennpunkt angeordneten beabstandet.

Nach einer optionalen Modifikation der Erfindung ist jedes der mehreren Lichtquellen der Beleuchtungseinheit ein Zeilenlicht, wobei bei der Ausrichtung der Zeilenlichter zueinander die Längsrichtungen dieser parallel jedoch nicht identisch zueinander sein können.

Ein Linienlicht zeichnet sich durch seine linienförmige Form und die hiervon ausgehende Ausstrahlung von Licht aus, bei der ein Licht entlang einer Längsrichtung des Linienlichts ausgestrahlt wird. Vorzugsweise ist das Linienlicht einer jeweiligen Lichtquelle parallel zu einer Zylinderachse einer in dem Strahlengang von der Beleuchtungseinheit zu der Aufzeichnungseinheit angeordneten Zylinderlinse angeordnet.

Zudem können die mehreren Linienlichter in einer Richtung senkrecht zur Zylinderachse der Zylinderlinse versetzt angeordnet sein.

Nach einer Fortbildung der Erfindung hat eine erste der Lichtquellen die Farbe Rot, eine zweite der Lichtquellen die Farbe Grün und eine Dritte der Lichtquellen die Farbe Blau.

Mit dieser Farbgebung ist es möglich, dass die Aufzeichnungseinheit eine RGB-Farbkamera ist, die beispielsweise über ein Bayer-Pattern in RGB verfügt.

Nach einer bevorzugten Variation der Erfindung ist der einer Prüfung zu unterziehende Behälter ganz oder teilweise transparent und kann beispielsweise eine Spritze, ein Vial oder eine Ampulle darstellen. Vorzugsweise ist die in dem einer Prüfung zu unterziehenden Behälter vorhandene Flüssigkeit eine transparente Flüssigkeit.

Die Erfindung betrifft ferner ein Verfahren zur Detektion von Luftblasen in einem mit Flüssigkeit befüllten Behälter, das mit einer Vorrichtung nach einer der vorgehenden Variationen durchgeführt wird. In dem Verfahren wird der Behälter mit einer Beleuchtungseinheit bestrahlt, eine Abbildung des durch die Beleuchtungseinheit bestrahlten Behälters durch eine Aufzeichnungseinheit aufgenommen und die Abbildung mittels einer Auswerteeinheit ausgewertet. Ferner wird der Behälter von mindestens zwei Lichtquellen der Beleuchtungseinheit bestrahlt, die sich in ihrer spektralen Lichtfarbe und/oder ihrer Polarisation voneinander unterscheiden. Die von den mindestens zwei Lichtquellen ausgehenden Lichtstrahlen verlaufen erfindungsgemäß in einem Inspektionsbereich für den Behälter nicht parallel zueinander und dringen bei einem Passieren des Behälters, der frei von Luftblasen oder anderen Fremdpartikeln ist, nicht in den Aufzeichnungsbereich der Aufzeichnungseinheit oder weisen eine kontinuierliche bzw. gleichmäßige Intensität im Aufzeichnungsbereich der Aufzeichnungseinheit auf.

Erfindungsgemäß wird bei einer Auswertung der Abbildung anhand einer spezifischen Anordnung der von den Lichtquellen abgegebenen, voneinander unterscheidbaren Lichtstrahlen auf das Vorhandensein einer Luftblase geschlossen.

Nach einer optionalen Modifikation der Erfindung wird auf das Vorhandensein einer Luftblase geschlossen, wenn die Abbildung eine spezifische Anordnung der von den Lichtquellen abgegebenen, voneinander unterscheidbaren Lichtstrahlen wiedergibt, die der tatsächlichen Anordnungspositionierung einer Untergruppe der Lichtquellen oder aller Lichtquellen in der Beleuchtungseinheit entspricht.

Weitere Merkmale, Vorteile und Einzelheiten werden anhand der nachfolgenden Diskussion der Figuren ersichtlich. Dabei zeigen:
- Fig. 1:: drei Beispiele für mit Flüssigkeit befüllte Behälter, wobei in der Flüssigkeit jeweils eine Luftblase vorhanden ist,
- Fig. 2:: einen schematischen Aufbau eines Ausführungsbeispiels der vorliegenden Vorrichtung nach der Erfindung,
- Fig. 3:: den Strahlenverlauf der mehreren Lichtquellen bei einem Auftreffen auf eine Luftblase sowie eine schematische Darstellung eines Aufzeichnungsbildes einer Aufzeichnungseinheit,
- Fig. 4:: den schematischen Verlauf der Lichtstrahlen der mehreren Lichtquellen beim Auftreffen auf einen Glaspartikel sowie die schematische Abbildung der Aufzeichnungseinheit,
- Fig. 5:: ein Bild der Aufzeichnungseinheit bei einem mit Wasser gefüllten Behälter, der geschüttelt worden ist,
- Figs. 6a-b:: Ansichten eines Behälters zum Deutlichmachens des Unterschieds einer Luftblase und einem Glaspartikel,
- Figs. 7a-b:: Ansichten eines Behälters zum Deutlichmachen des Unterschieds zwischen einer Luftblase und einem Metallpartikel,
- Figs. 8a-b:: Ansichten eines Behälters zum Deutlichmachen eines Kratzers an oder in dem Behälter,
- Figs. 9a-b:: Ansichten eines Behälters zum Deutlichmachen eines Risses des Behälters,
- Fig. 10:: eine Variation von mehreren Luftblasen, zur Darstellung der gemeinsamen Eigenschaften der Luftblasen in den Bildern,
- Figs. 11a-b:: die Abbildung von Behältern, die mit einer aufgedruckten Skala versehen sind und das Ablesen einer Füllhöhe erschweren, und
- Fig. 12:: die Abbildung eines Behälters, der über eine Skala mit Dezimaltrennzeichen verfügt zum Deutlichmachen, dass Dezimaltrennzeichen nicht als Luftblasen erkannt werden.

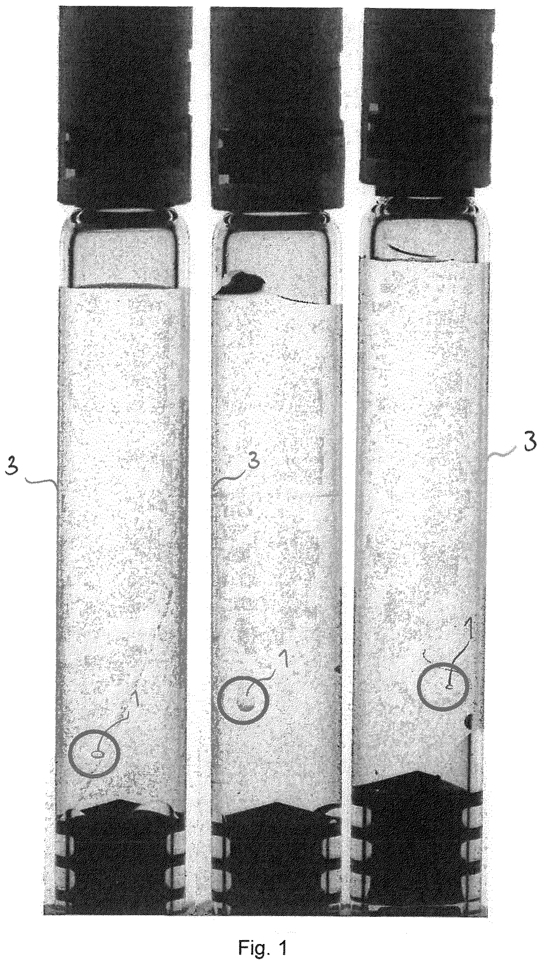

Fig. 1 zeigt drei Beispielbilder von Behältern 3, in deren Flüssigkeit eine Luftblase 1 vorhanden ist. Die Luftblase 1 ist dabei in einem der Zeichnung hinzugefügten Kreis angeordnet. Zwar erscheinen die Luftblasen 1 im Wesentlichen kreisrund, für eine Unterscheidung von anderen Defekten ist allein dieses Merkmal jedoch nicht ausreichend. Würde man sich nur auf dieses Merkmal verlassen, wäre das Vorhandensein von kreisförmigen Glaspartikeln 81 bspw. nicht zu detektieren.

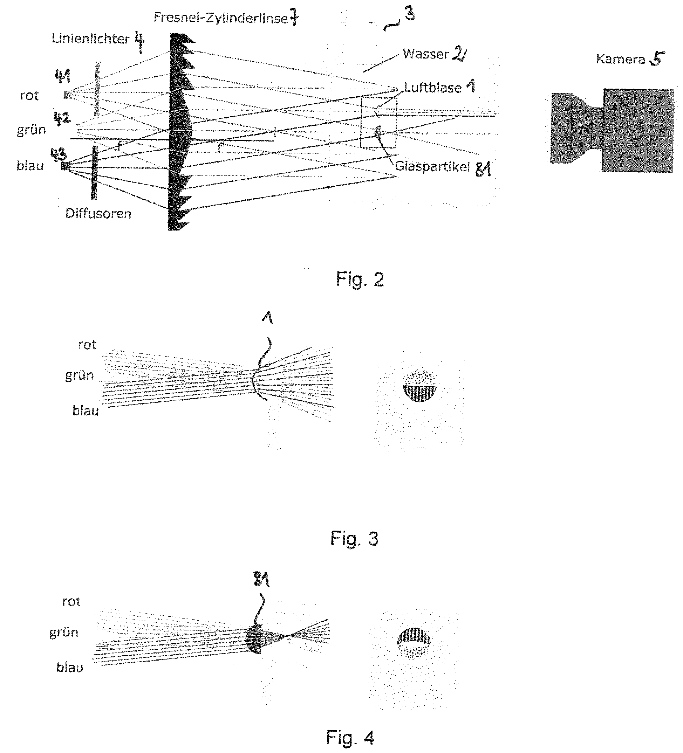

Fig. 2 zeigt den Grundaufbau eines Ausführungsbeispiels einer erfindungsgemäßen Vorrichtung. Man erkennt die

Beleuchtungseinheit 4, die mehrere Lichtquellen 41, 42, 43 umfasst. In dieser Darstellung ist die Lichtquelle 41 ein Licht mit der Spektralfarbe Rot, die Lichtquelle 42 ein Licht mit der Spektralfarbe Grün und die Lichtquelle 43 ein Licht mit der Spektralfarbe Blau (die verschiedenen Farben sind in den Figs. 2 - 4 durch unterschiedliche Strichlierungen wiedergegeben). Von den einzelnen Lichtquellen 41, 42, 43 ausgehende Lichtstrahlen werden mit einer Fresnel-Zylinderlinse 7 auf einen Inspektionsbereich eines Behälters 3 gelenkt. Der Behälter 3 ist mit einer Flüssigkeit 2 gefüllt, in der eine Luftblase 1 sowie ein Glaspartikel 81 vorhanden sind. Der Strahlengang der einzelnen Lichtstrahlen der mehreren Lichtquellen 41, 42, 43 verändert sich je nachdem, ob die Strahlen auf die in dem Wasser vorhandene Luftblase 1 oder den Glaspartikel 81 treffen. Zudem erkennt man, dass die Ablenkung der Lichtstrahlen von einer Aufzeichnungseinheit 5, hier eine Kamera, erfasst wird.

Für eine zuverlässigere Erkennung und Unterscheidung soll die Beleuchtung auf die Erkennung von Luftblasen 1 optimiert werden, um der Software zusätzliche Optionen bereitzustellen. Die Inspektion nach Defekten 8 (Risse 82 in der Seitenwand, Partikel 81) darf dabei nicht beeinträchtigt werden. Inspektion und Unterscheidung sollen gleichzeitig erfolgen, eine ausschließliche Aussage darüber, ob Luftblasen 1 vorhanden sind, ist unzureichend. Vielmehr sollen sämtliche anwesenden Luftblasen 1 ignoriert werden und Defekte 8 zwischen ihnen als solche erkannt werden.

Dies kann erreicht werden, indem verschiedene Lichtquellen 41, 42, 43 farblich kodiert werden, wobei die jeweilige Farbe selbst zunächst keine entscheidende Rolle spielt (alternativ auch durch zeitliche Abfolge oder Polarisation). Die Auswertung der Bilder erfolgt aber mit einer Farbkamera 5, daher eignen sich die Farben Rot, Grün und Blau (bei Farbkamera beispielsweise mit Bayer-Pattern in RGB).

Drei Zeilenlichter 41, 42, 43 in unterschiedlichen Farben (rot, grün, blau) werden so hinter einer (Fresnel)- Linse 7 positioniert, dass sich drei mehr oder weniger parallele Strahlenbündel ergeben. Das mittlere (hier Grüne) Strahlenbündel sollte dabei gut parallelisiert sein, d. h. das Zeilenlicht 42 sollte recht genau im Brennpunkt der Linse 7 angeordnet sein. Im Bild erscheint der (grüne) Hintergrund relativ homogen, die Parallelität führt außerdem zu einem sehr guten Kontrast, sowohl für Defekte 8, als auch für Luftblasen 1 und ebenso für andere Unregelmäßigkeiten wie Fingerabdrücke oder externe Verschmutzung. Hier soll die eigentliche Inspektion erfolgen.

Die übrigen Zeilenlichter41, 43 (Rot und Blau) werden leicht oberhalb und unterhalb des Mittleren 42 angeordnet. Diese müssen nicht zwangsweise vollständig parallelisiert werden sondern können mit einer Diffusorfläche vorher aufgeweitet werden. Um sicherzustellen, dass über den gesamten Inspektionsbereich (z. B. Füllvolumen einer Spritze) ähnliche Lichtverhältnisse für das schräg einfallende Licht herrschen, ist aber Parallelität hilfreich.

Unter der Annahme, dass Luftblasen 1 im Flüssigkeitsvolumen kugelförmig oder halbkugelförmig (wenn sie an der Seitenwand haften) sind, wirken sie wie Konkavlinsen unterschiedlicher Größe und Brennweite. Diese Annahme ist praktisch gut erfüllt. Glaspartikel 81 allgemein, oder Glaskugeln im Besonderen, wirken hingegen wie eine Konvexlinse. Grund hierfür sind die jeweils unterschiedlichen Verhältnisse der optischen Dichten zueinander, also Luft (n_{L}=1), Wasser (nw=1.33) und Glas (n_{G}=1.5). D. h. Luftblasen erscheinen zuverlässig als Kreise mit einer (hier) roten oberen Hälfte und blauen unteren Hälfte. Bei größeren Luftblasen erscheint die Mitte grün. Das Flächenverhältnis der roten und grünen Teile ist ähnlich groß und steht in einem Verhältnis zur Gesamtfläche der Luftblase. Der Abstand der roten und blauen Flächen steht in einem Verhältnis zur Gesamtgröße der Luftblase. Je nach Position und Form sind gewisse Variationen möglich, insbesondere für Luftblasen auf der Vorder- bzw. Rückseite der (i. d. R. zylindrischen) Behälter.

Glaskugeln (worst case) erscheinen als Kreise mit blauer oberer Hälfte und roter unterer Hälfte.

Glaspartikel 81 allgemein (beliebige Form) verhalten sich tendenziell ähnlich wie Glaskugeln oder zufällig, je nach Form.

Kratzer 83 erscheinen meist sowohl rot als auch blau, können aber stellenweise auch Farbübergänge aufweisen oder schwarz erscheinen.

Risse 82 können je nach Verlauf/Form (zufällig) rotes, blaues oder kein Licht zur Kamera 5 reflektieren.

Wichtig hierbei ist nur, dass Luftblasen 1 dieses Verhalten zuverlässig aufweisen. Ob und wie andere Partikel/Defekte 8 mit dem Licht interagieren ist unbedeutend solange es nicht in gleicher Weise wie bei Luftblasen 1 ist.

Fig. 3 zeigt erneut das oben behandelte in grafisch ansprechender Form. Die schräg einfallenden in Ihrer Farbe verschiedenen Strahlenbündel werden von der Luftblase 1 so abgelenkt, dass ein von oben einfallendes rotes Licht aus Sicht der Aufzeichnungseinheit 5 oben verbleibt. Ein von unten schräg einfallendes blaues Licht wird von der Luftblase 1 so abgelenkt, dass es aus Sicht der Aufzeichnungseinheit 5 unten verbleibt. Damit ergibt sich, dass eine Luftblase 1 nach der vorgestellten Konfiguration der Vorrichtung durch einen im oberen Bereich roten und eine im unteren Bereich blauen Abschnitt gekennzeichnet ist.

Fig. 4 zeigt in einer schematischen Darstellung was passiert, wenn in einem Inspektionsbereich die unterschiedlich farbigen Strahlenbündel auf einen Glaspartikel 81 treffen, die Ablenkung des Glaspartikels 81 führt dazu, dass die von unten schräg einfallenden blauen Lichtstrahlen sich in einem oberen Bereich befinden und die von oben schräg einfallenden roten Lichtstrahlen sich in einem unteren Bereich befinden. Dadurch lässt sich sehr leicht unterscheiden, ob das von den Lichtstrahlen durchstrahlte Objekt eine Luftblase 1 (oben rotes, unten blaues Licht) oder ein Glaspartikel 81 (oben blaues, unten rotes Licht) ist.

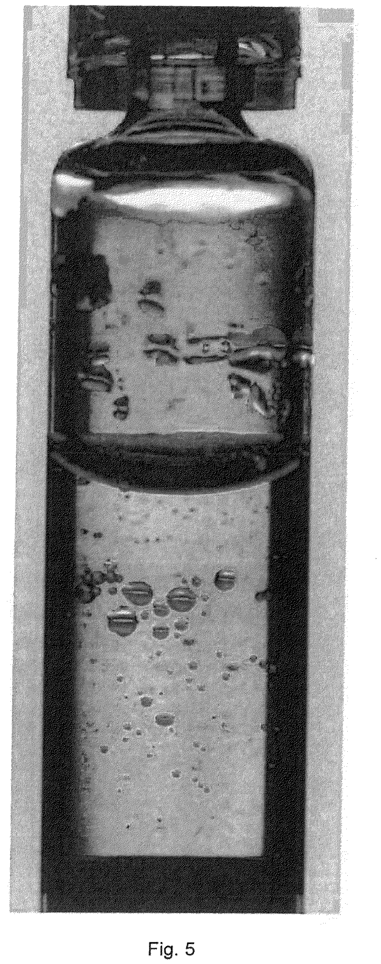

Fig. 5 zeigt eine mit Wasser gefüllte Spritze die heftig geschüttelt worden ist. Hier sind viele Luftblasen 1 unterschiedlicher Größe sichtbar. Sofern es die grafische Auflösung der Zeichnung zulässt, ist erkennbar, dass alle Luftblasen 1 die erwartete Charakteristik eines rot-blau-Übergangs aufweisen. Nur dort, wo das schräg einfallende Licht (rot und blau) vom Meniskus bzw. dem Stoppen verdeckt wird, erscheinen sie entweder nur rot oder nur blau.

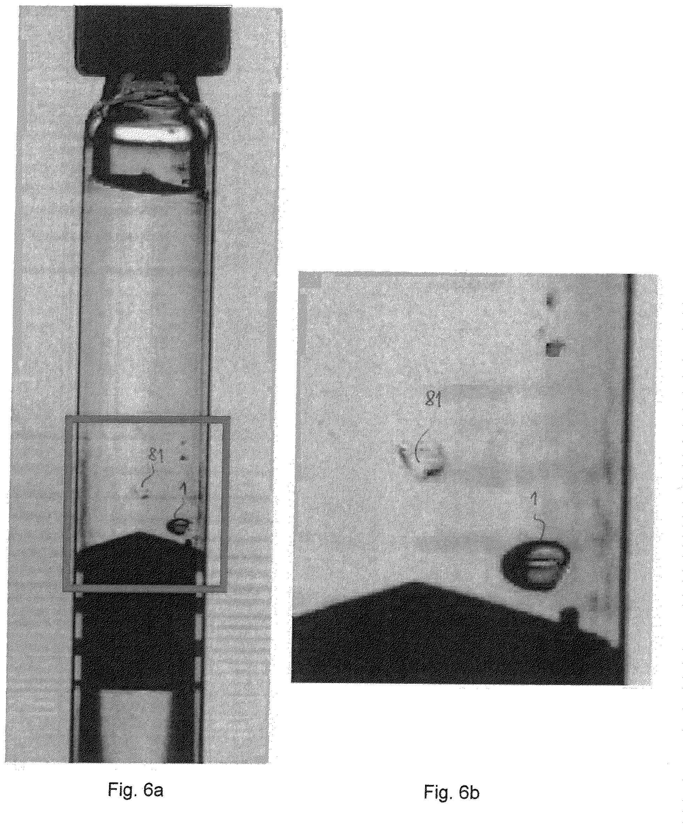

Figs. 6a und 6b zeigen einen mit Flüssigkeit 2 gefüllten Behälter 3, wobei in der Flüssigkeit sowohl Luftblasen 1 als auch ein Glaspartikel 81 enthalten sind. Da es sich bei dem Glaspartikel 81 nicht um eine Kugel oder Halbkugel handelt, sondern eher um einen flachen Splitter, ist der vorher aufgezeigte Effekt, wonach die Farbkonstellation invers zu einer Luftblase 1 ist, nicht besonders ausprägt, dennoch aber vorhanden.

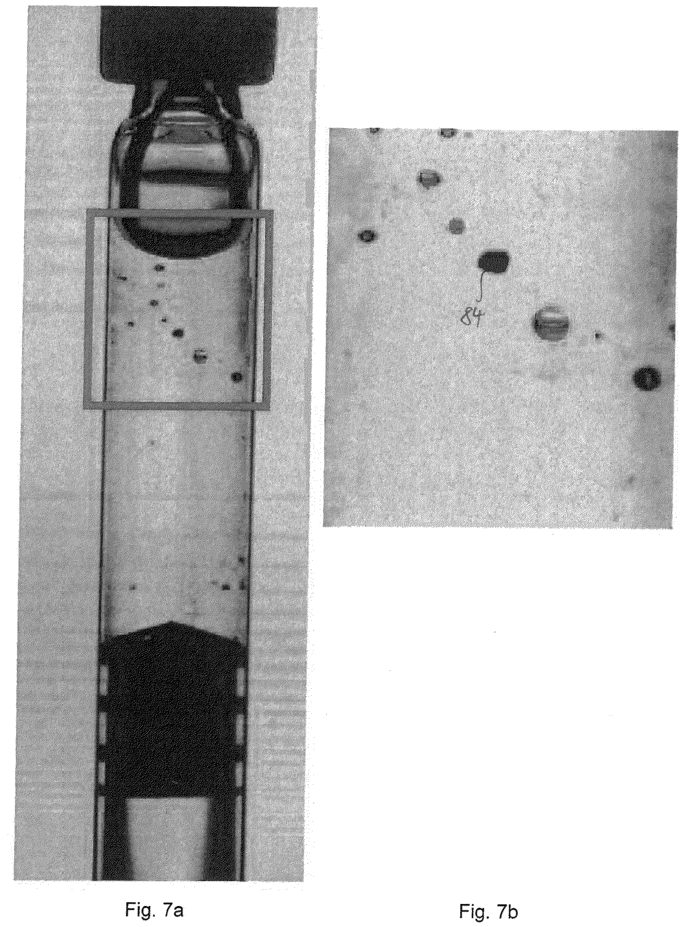

Figs. 7a und 7b zeigen mehrere Luftblasen 1 sowie einen Metallpartikel 84 in der von dem Behälter 3 aufgenommenen Flüssigkeit 2. Der Metallpartikel 84 fällt dadurch auf, dass er durchgängig schwarz erscheint und keinerlei Farbgebung hin zu rot, grün oder blau aufweist.

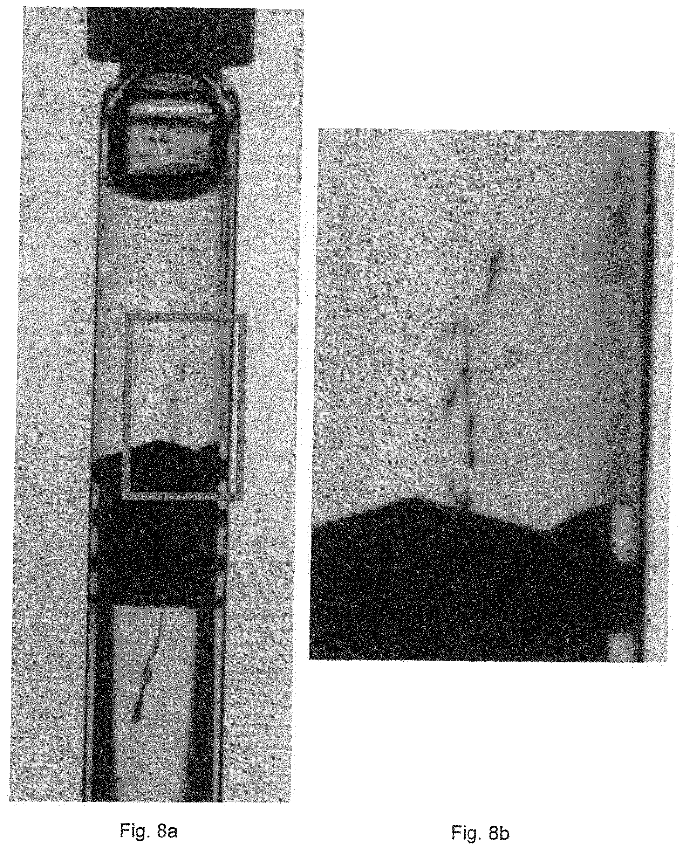

Die Figuren 8a und 8b zeigen einen Kratzer 83, der gleichermaßen rote und blaue Abschnitte aufweist. Ohne den ausgeprägten Übergang von Rot nach blau, wie das im Fall einer Luftblase 1 der Fall gewesen wäre, ist der eindeutige von Luftblasen 1 zu unterscheiden, auch wenn der Kratzer 83 deutlich kleiner ist.

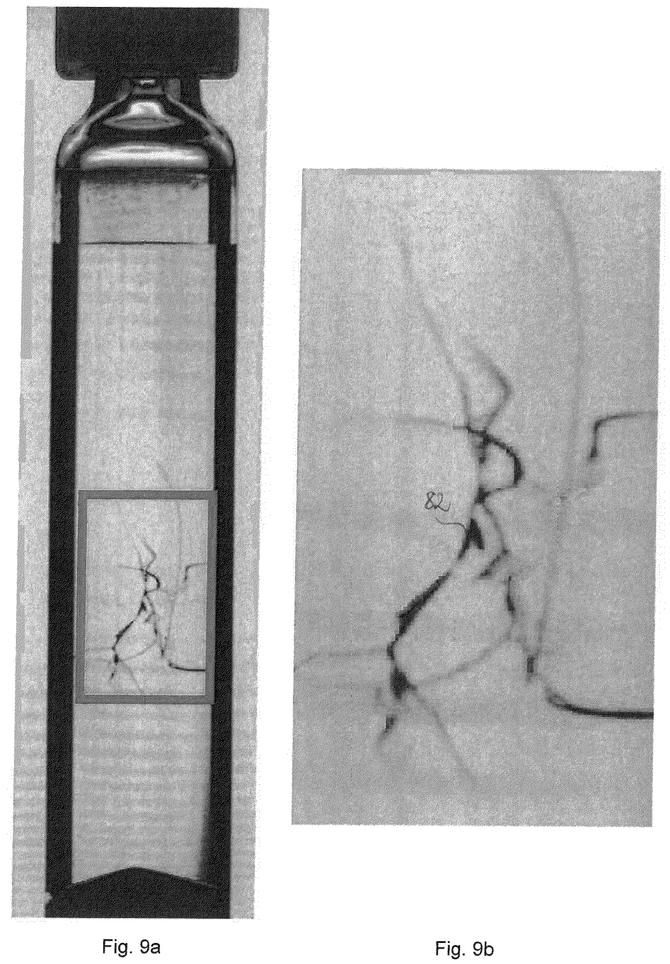

Die Figuren 9a und 9b zeigen einen Riss 82 in dem Behälter 3 der viele Verzweigungen aufweist. Stellenweise erscheint der Riss 82 rot oder blau, meist jedoch schwarz. Es kann auch passieren, dass er sehr lokal eingeschränkt die Bedingungen einer Luftblase 1 erfüllt. In diesem Fall würde der sehr kleine die Konfigurationsmerkmale einer Luftblase 1 erfüllende Abschnitt des größeren Risses 82 ausmaskiert werden. Für die Detektion eines Risses 82 hätte dies keine Nachteile zur Folge, da der Fall nicht eintritt, dass der gesamte Riss 82 ausmaskiert wird. Ausmaskiert werden lediglich Unterbereiche des größeren Risses 82.

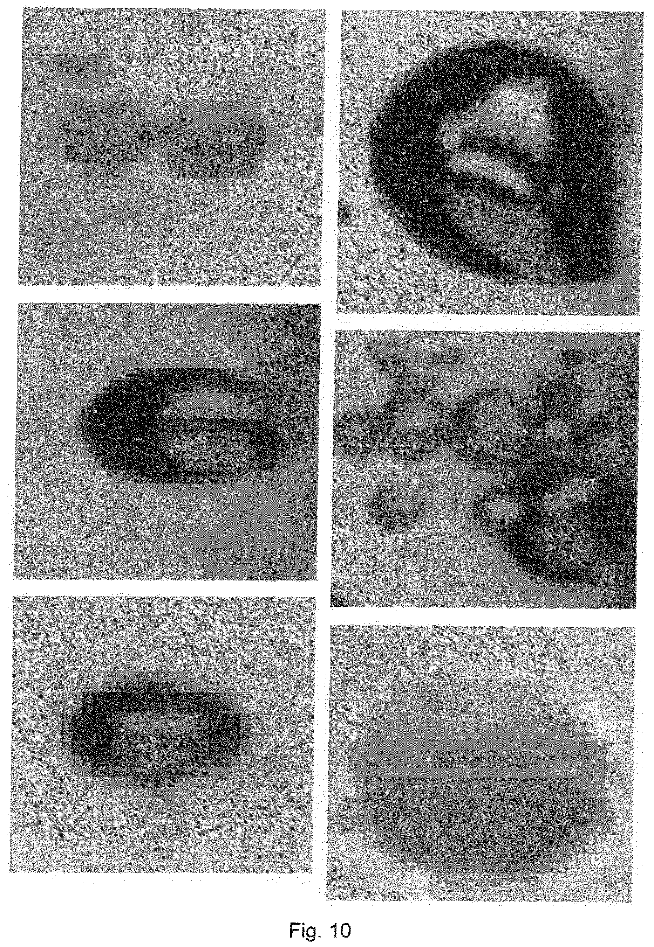

Fig. 10 zeigt verschiedene Erscheinungsformen von Luftblasen 1. Die Auswertung der Objekte ist von zentraler Bedeutung. Es gilt Objekte mit einem Rot- (Grün)-Blau-Übergang, deren rote und blaue Flächenanteile ähnlich groß sind, mit hoher Wahrscheinlichkeit als Luftblasen 1 zu identifizieren und für die übrige Inspektion nach Defekten 8 zu ignorieren. Die Herausforderung dabei liegt darin, Schwankungen bei der Erscheinung der Luftblasen 1 wie z. B. rechts dargestellt gleichermaßen zu berücksichtigen. Die Bildausschnitte sind dabei skaliert, die Luftblase 1 rechts unten ist mit Abstand die größte. Innerhalb eines Objekts (Luftblase 1 oder Defekt 8) werden jeweils für den blauen und roten Flächenanteil Schwerpunkt und Fläche ermittelt. Diese werden dann miteinander verrechnet (Flächen sollten ähnlich groß sein, Schwerpunkt blau unten, Schwerpunkt rot oben und beide in bestimmten Abstand zueinander, abhängig von ihrer Fläche). Die "Bounding Box", also der ein Objekt in ein Rechteck einhüllende Rahmen, eignet sich möglicherweise nicht optimal für weitere Berechnungen, da sie sehr stark abhängig von der Form der Objekte ist. Insbesondere bei zusammenhängenden Objekten (Luftblasen 1 zueinander, aber auch Luftblasen 1 an Defekten 8 wie Kratzern 83 oder Rissen 82 bereitet dieser objektbasierte Ansatz Probleme. Zwar können zusammenhängende Objekte mit Werkzeugen der Bildverarbeitung in gewissen Grenzen separiert werden, dies bewirkt aber auch bei Defekten eine Zerteilung und erhöht somit die Gefahr, dass Teile von Defekten 8 als Luftblase 1 interpretiert werden.

Anstatt komplette Flächen miteinander zu verrechnen verfolgt dieser Ansatz eine spaltenweise Betrachtung, da der Effekt in der gegebenen Anordnung eine ausgeprägte Richtungsabhängigkeit besitzt. Dem Fachmann ist klar, dass selbstverständlich auch eine zeilenweise Betrachtung in Betracht kommt, wenn der Behälter, die Lichtquellen und/oder die Auswerteeinheit entsprechend angeordnet sind. Die nachfolgende Beschreibung erfolgt anhand der Konfiguration der vorhergehenden Ausführungsbeispiele, ist jedoch darauf nicht beschränkt.

Pro Spalte (bei stehenden Behälter und Beleuchtung von unten und oben) müssen gewisse Bedingungen erfüllt sein, damit ein Objekt als Luftblase deklariert wird:
- Verhältnis der Anzahl von unteren (z. B. blauen) und oberen (z. B. roten) Pixeln innerhalb eines gewissen Intervalls (analog zu Flächenverhältnis),
- Abstand zwischen unteren und oberen Pixeln in gewisser Relation zur Anzahl ("Gap") (analog zu Schwerpunkte bzw. Abstand),
- Maximaler Überlappungsbereich zwischen unteren und oberen Pixeln (besonders bei kleineren Luftblasen relevant),
- Objekte müssen mit "eindeutig" unterem (blauem) und oberem (rotem) Pixel beginnen und enden (also nicht mit Überlappungspixeln), und
- Zwischen Objekten (also solchen die als positive Objekte erkannt wurden) kann/muss mindestens ein gewisser Abstand sein (Luftblasen bzw. Übergänge dürfen einander nicht berühren).

Als Ergebnis bleiben alle Pixel, die als "positiv zum Objekt gehörend" deklariert wurden, mit Grauwert kodiert, übrig (also linke, rechte, überlappende und "Gap" Pixel). Da die eigentliche Luftblase mitunter deutlich größer als ihre in Farbe erscheinenden Bereiche sein kann (siehe Bilder oben) ist es weiter von Vorteil, diese "positiv zum Objekt gehörenden" Bereiche aufzublasen (mit Bildverarbeitungswerkzeugen) und sie schließlich von einem Ergebnisbild zu subtrahieren (maskieren). Alternativ können auch sämtliche Objekte, welche "positiv zum Objekt gehörende" Bereiche besitzen, ignoriert werden. Hier besteht aber die Gefahr, dass Defekte, die an Luftblasen 1 anhaften ebenfalls ignoriert werden. Besondere Zwischenschritte zur Separation von Objekten sind dabei ratsam.

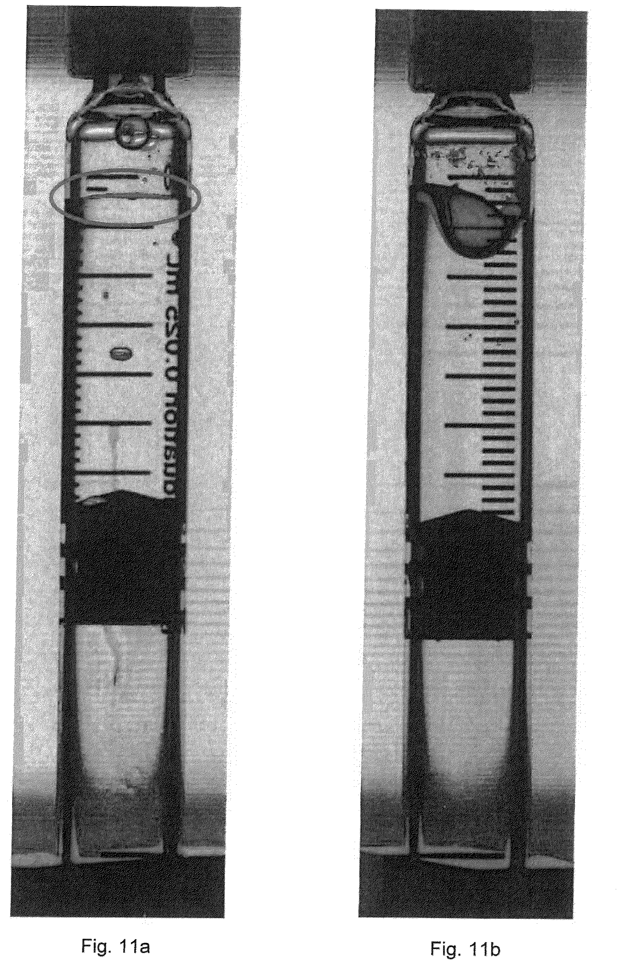

Zudem ist es mit der vorliegenden Erfindung möglich, Messungen der Füllhöhe zuverlässiger auszuführen, da auch mit einer Skalierung bedruckte Behälter 3 den Meniskus nicht verdecken können. Fig. 11a zeigt eine bedruckte Spritze mit planem Meniskus. Da die Messung der Füllhöhe bei Spritzen mit Skalierung nicht trivial ist, insbesondere wenn der Meniskus sehr flach ist, wie in der Abbildung der Fig. 11a, erweist sich die verschiedenfarbige Beleuchtung als weiter vorteilhaft.

Fig. 11b zeigt eine bedruckte Spritze während einer Schnellrotation. Da die Unterseite des Meniskus hier das blaue Licht reflektiert, ist er eindeutig als solcher erkennbar, auch wenn die Skala die Messung erschwert.

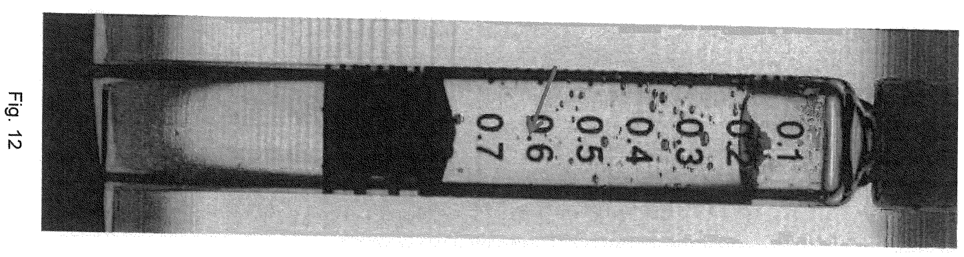

Fig. 12 zeigt einen Behälter 3, der mit einer Skalierung, die Dezimaltrennzeichen aufweist, versehen ist. Auch hierbei hilft die vorliegende Erfindung solche Dezimaltrennzeichen nicht fehlerhafterweise als einen Partikel innerhalb der Flüssigkeit wahrzunehmen.

Die Erfindung vermag demnach zu einer Reduktion des Falschausschusses durch Luftblasen bei der Inspektion von transparenten, wässrigen oder viskosen Flüssigkeiten beizutragen. Zudem kann mit der Erfindung nach Defekten des Glasbehälters (Risse, Kratzer, Einschlüsse) sowie partikulären Defekten in der Flüssigkeit gesucht werden. Eine Füllstandsmessung ist mit der Erfindung sowohl bei bedruckten Behältern als auch bei oberflächenbehandelten Behältern möglich. Insgesamt wird die Sensitivität für oben genannte. Defekte (durch paralleles Licht) erhöht.

## Patentansprüche

1. Vorrichtung zur Detektion von Luftblasen (1) in einem mit Flüssigkeit (2) befüllten Behälter (3), umfassend:
eine Beleuchtungseinheit (4) zum Bestrahlen des Behälters (3) mit Licht, und
eine Aufzeichnungseinheit (5) zum Aufzeichnen einer Abbildung des durch die Beleuchtungseinheit (4) bestrahlten Behälters (3),
wobei die Beleuchtungseinheit (4) mindestens zwei Lichtquellen (41, 42, 43) umfasst, die sich in ihrer spektralen Lichtfarbe und/oder ihrer Polarisation voneinander unterscheiden,
wobei die Vorrichtung ferner eine Auswerteeinheit (6) umfasst, die dazu ausgelegt ist, bei einer Auswertung der Abbildung der Aufzeichnungseinheit (5) aufgrund einer spezifischen Anordnung der von den Lichtquellen (41, 42, 43) abgegebenen, voneinander unterscheidbaren Lichtstrahlen auf das Vorhandensein einer Luftblase (1) zu schließen,
wobei der Behälter (3) zwischen Beleuchtungseinheit (4) und Aufzeichnungseinheit (5) anordenbar ist und die Beleuchtungseinheit (4) und die Aufzeichnungseinheit (5) einander zugewandt sind, um eine Durchlichtbeleuchtung des Behälters (3) vorzunehmen, und
wobei die Aufzeichnungseinheit (5) derart positioniert ist,
i) dass die von den mindestens zwei Lichtquellen (41, 42, 43) ausgehenden Lichtstrahlen bei einem Passieren des Behälters (3), der frei von Luftblasen oder anderen Fremdpartikeln ist, nicht in den Aufzeichnungsbereich der Aufzeichnungseinheit (5) dringen und bei einem Treffen auf eine Luftblase (1) oder einen Glaspartikel (81) in Richtung der Aufzeichnungseinheit (5) abgelenkt werden, oder
ii) dass die von den mindestens zwei Lichtquellen (41, 42, 43) ausgehenden Lichtstrahlen bei einem Passieren des Behälters (3), der frei von Luftblasen oder anderen Fremdpartikeln ist, eine kontinuierliche bzw. gleichmäßige Intensität im Aufzeichnungsbereich der Aufzeichnungseinheit (5) aufweisen und bei einem Treffen auf eine Luftblase (1) oder einen Glaspartikel (81) derart abgelenkt werden, dass sich eine durch die Aufzeichnungseinheit (5) detektierbare Intensitätserhöhung von Lichtstrahlen der mindestens zwei Lichtquellen (41, 42, 43) ergibt,
wobei die Lichtstrahlen der mindestens zwei Lichtquellen (41, 42, 43) in einem Inspektionsbereich für den Behälter (3) nicht parallel zueinander verlaufen.

2. Vorrichtung nach Anspruch 1, wobei die Beleuchtungseinheit (4) drei Lichtquellen (41, 42, 43) umfasst, die sich in ihrer spektralen Lichtfarbe und/oder ihrer Polarisation voneinander unterscheiden.

3. Vorrichtung nach einem der vorhergehenden Ansprüche, wobei die Aufzeichnungseinheit (5) eine Farbkamera und/oder eine Kamera mit einem oder mehreren Polarisationsfiltern ist.

4. Vorrichtung nach einem der vorhergehenden Ansprüche, ferner umfassend eine Linse (7), die in dem Strahlengang von der Beleuchtungseinheit (4) zu der Aufzeichnungseinheit (5) angeordnet ist und dazu ausgelegt ist, die Lichtstrahlen der mindestens zwei Lichtquellen (41, 42, 43) der Beleuchtungseinheit (4) parallel auf einen Inspektionsbereich eines Behälters (3) zu lenken.

5. Vorrichtung nach Anspruch 4, wobei die Linse (7) eine Zylinderlinse, eine Fresnel-Linse und/oder eine Fresnel-Zylinderlinse ist.

6. Vorrichtung nach einem der vorhergehenden Ansprüche 5 oder 6, wobei genau eine der mindestens zwei Lichtquellen (41, 42, 43) im Brennpunkt der Linse (7) angeordnet ist und die restlichen Lichtquellen (41, 42, 43) der Beleuchtungseinheit (4) beabstandet hiervon auf derselben Seite der Linse (7) wie die im Brennpunkt angeordnete Lichtquelle angeordnet sind.

7. Vorrichtung nach einem der vorhergehenden Ansprüche, wobei jede der mindestens zwei Lichtquellen (41, 42, 43) der Beleuchtungseinheit (4) ein Zeilenlicht ist, wobei vorzugsweise die Längsrichtungen der Zeilenlichter zueinander parallel jedoch nicht identisch sind.

8. Vorrichtung nach Anspruch 7, wobei die Zeilenlichter parallel zu einer Zylinderachse einer in dem Strahlengang von der Beleuchtungseinheit (4) zu der Aufzeichnungseinheit (5) angeordneten Zylinderlinse angeordnet sind.

9. Vorrichtung nach einem der vorhergehenden Ansprüche, wobei eine erste der Lichtquellen (41) die Farbe Rot, eine zweite der Lichtquellen die Farbe Grün (42) und eine dritte der Lichtquellen (43) die Farbe Blau hat.

10. Vorrichtung nach einem der vorhergehenden Ansprüche, wobei der Behälter (3) ganz oder teilweise transparent ist und vorzugsweise eine Spritze, ein Vial oder eine Ampulle ist.

11. Vorrichtung nach einem der vorhergehenden Ansprüche, wobei die in dem Behälter (3) vorhandene Flüssigkeit eine transparente Flüssigkeit (2) ist.

12. Verfahren zur Detektion von Luftblasen (1) in einem mit Flüssigkeit (2) befüllten Behälter (3) mit einer Vorrichtung nach einem der vorhergehenden Ansprüche, wobei in dem Verfahren:
der Behälter (3) mit einer Beleuchtungseinheit (4) bestrahlt wird,
eine Abbildung des durch die Beleuchtungseinheit (4) bestrahlten Behälters (3) durch eine Aufzeichnungseinheit (5) aufgenommen wird, und
die Abbildung mittels einer Auswerteeinheit (6) ausgewertet wird,
wobei der Behälter (3) von mindestens zwei Lichtquellen (41, 42, 43) der Beleuchtungseinheit (4) bestrahlt wird, die sich in ihrer spektralen Lichtfarbe und/oder ihrer Polarisation voneinander unterscheiden,
wobei die von den mindestens zwei Lichtquellen (41, 42, 43) ausgehenden Lichtstrahlen in einem Inspektionsbereich für den Behälter (3) nicht parallel zueinander verlaufen,
wobei der Behälter (3) zwischen Beleuchtungseinheit (4) und Aufzeichnungseinheit (5) anordenbar ist und die Beleuchtungseinheit (4) und die Aufzeichnungseinheit (5) einander zugewandt sind, um eine Durchlichtbeleuchtung des Behälters (3) vorzunehmen,
wobei die von den mindestens zwei Lichtquellen (41, 42, 43) ausgehenden Lichtstrahlen bei einem Passieren des Behälters (3), der frei von Luftblasen oder anderen Fremdpartikeln ist:
i) nicht in den Aufzeichnungsbereich der Aufzeichnungseinheit (5) dringen und bei einem Treffen auf eine Luftblase (1) oder einen Glaspartikel (81) in Richtung der Aufzeichnungseinheit (5) abgelenkt werden oder
ii) eine kontinuierliche bzw. gleichmäßige Intensität im Aufzeichnungsbereich der Aufzeichnungseinheit (5) aufweisen und bei einem Treffen auf eine Luftblase (1) oder einen Glaspartikel (81) derart abgelenkt werden, dass sich eine durch die Aufzeichnungseinheit (5) detektierbare Intensitätserhöhung von Lichtstrahlen der mindestens zwei Lichtquellen (41, 42, 43) ergibt,
und wobei bei der Auswertung der Abbildung mittels der Auswerteeinheit (6) anhand einer spezifischen Anordnung der von den Lichtquellen (41, 42, 43) abgegebenen, voneinander unterscheidbaren Lichtstrahlen auf das Vorhandensein einer Luftblase (1) geschlossen wird.

13. Verfahren nach Anspruch 12, wobei auf das Vorhandensein einer Luftblase (1) geschlossen wird, wenn die Abbildung eine spezifische Anordnung der von den Lichtquellen (41, 42, 43) abgegebenen, voneinander unterscheidbaren Lichtstrahlen wiedergibt, die der tatsächlichen Anordnungsreihenfolge einer Untergruppe der Lichtquellen (41, 42, 43) oder aller Lichtquellen (41, 42, 43) in der Beleuchtungseinheit (4) entspricht.

## Claims

1. Device for detecting air bubbles (1) in a container (3) filled with liquid (2), said device comprising;
an illumination unit (4) for irradiating the container (3) with light, and
a recording unit (5) for recording an image of the container (3) irradiated by the illumination unit (4),
wherein the illumination unit (4) comprises at least two light sources (41, 42, 43) which differ from one another in their spectral light colour and/or their polarisation,
wherein the device further comprises an evaluation unit (6) which is designed to infer the presence of an air bubble (1) during an evaluation of the image of the recording unit (5) on the basis of a specific arrangement of the light beams, which can be distinguished from one another, emitted by the light sources (41, 42, 43),
wherein the container (3) can be arranged between the illumination unit (4) and the recording unit (5), and the illumination unit (4) and the recording unit (5) face each other, in order to provide transmitted light illumination of the container (3), and
wherein the recording unit (5) is positioned in such a way
i) that the light beams emitted by the at least two light sources (41, 42, 43) do not penetrate into the recording area of the recording unit (5) when passing through the container (3), which is free of air bubbles or other foreign particles, and when they hit an air bubble (1) or a glass particle (81) are deflected in the direction of the recording unit (5), or
ii) that the light beams emitted by the two light sources (41, 42, 43) have a continuous or uniform intensity in the recording area of the recording unit (5) when passing through the container (3), which is free of air bubbles or other foreign particles, and when they hit an air bubble (1) or a glass particle (81) are deflected in such a way that an intensity increase of light beams of the at least two light sources (41, 42, 43) detectable by the recording unit (5) results,
wherein
the light beams of the at least two light sources (41, 42, 43) do not run parallel to one another in an inspection area for the container (3).

2. Device according to claim 1, wherein the illumination unit (4) comprises three light sources (41, 42, 43) which differ from one another in their spectral light colour and/or their polarisation.

3. Device according to any one of the preceding claims, wherein the recording unit (5) is a colour camera and/or a camera with one or more polarisation filters.

4. Device according to any one of the preceding claims, further comprising a lens (7) which is arranged in the beam path from the illumination unit (4) to the recording unit (5) and is designed to direct the light beams of the at least two light sources (41, 42, 43) of the illumination unit (4) in parallel onto an inspection area of a container (3).

5. Device according to claim 4, wherein the lens (7) is a cylinder lens, a Fresnel lens and/or a Fresnel cylinder lens.

6. Device according to any one of preceding claims 5 or 6, wherein precisely one of the at least two light sources (41, 42, 43) is arranged at the focal point of the lens (7) and the remaining light sources (41, 42, 43) of the illumination unit (4) are arranged at a distance therefrom on the same side of the lens (7) as the light source arranged at the focal point.

7. Device according to any one of the preceding claims, wherein each of the at least two light sources (41, 42, 43) of the illumination unit (4) is a line light, wherein preferably the longitudinal directions of the line lights are parallel but not identical to each other.

8. Device according to claim 7, wherein the line lights are arranged parallel to a cylinder axis of a cylinder lens arranged in the beam path from the illumination unit (4) to the recording unit (5).

9. Device according to any one of the preceding claims, wherein a first of the light sources (41) has the colour red, a second of the light sources has the colour green (42) and a third of the light sources (43) has the colour blue.

10. Device according to any one of the preceding claims, wherein the container (3) is completely or partially transparent and is, for example, a syringe, a vial or an ampoule.

11. Device according to any one of the preceding claims, wherein the liquid present in the container (3) is a transparent liquid (2).

12. Method for detecting air bubbles (1) in a container (3) filled with liquid (2), which is carried out using a device according to any one of the preceding claims, wherein in the method:
the container (3) is irradiated with an illumination unit (4),
an image of the container (3) irradiated by the illumination unit (4) is recorded by a recording unit (5), and
the image is evaluated by means of an evaluation unit (6),
wherein the container (3) is irradiated by at least two light sources (41, 42, 43) of the illumination unit (4) which differ from each other in their spectral light colour and/or their polarisation,
wherein the light beams emitted by the at least two light sources (41, 42, 43) do not run parallel to one another in an inspection area for the container (3),
wherein the container (3) can be arranged between illumination unit (4) and recording unit (5) and the illumination unit (4) and the recording unit (5) face each other, in order to provide transmitted light illumination of the container (3),
wherein the light beams emitted by the at least two light sources (41, 42, 43), when passing through the container (3), which is free of air bubbles or other foreign particles,
i) do not penetrate into the recording area of the recording unit (5), and when they hit an air bubble (1) or a glass particle (81) are deflected in the direction of the recording unit (5), or
ii) have a continuous or uniform intensity in the recording area of the recording unit (5) and when they hit an air bubble (1) or a glass particle (81) are deflected in such a way that an intensity increase of light beams of the at least two light sources (41, 42, 43) detectable by the recording unit (5) results,
and wherein the presence of an air bubble (1) is inferred when evaluating the image by means of the evaluation unit (6) on the basis of a specific arrangement of the light beams, which can be distinguished from one another, emitted by the light sources (41, 42, 43).

13. Method according to claim 12, wherein the presence of an air bubble (1) is inferred if the image represents a specific arrangement of the light beams, which can be distinguished from each other, emitted by the light sources (41, 42, 43) and said arrangement corresponds to the actual arrangement order of a subset of the light sources (41, 42, 43) or all light sources (41, 42, 43) in the illumination unit (4).

## Revendications

1. Dispositif de détection de bulles d'air (1) dans un contenant (3) rempli de liquide (2), comprenant :
une unité d'éclairage (4) destinée à irradier de lumière le contenant (3), et
une unité d'enregistrement (5) destinée à enregistrer une reproduction du contenant (3) irradié par l'unité d'éclairage (4),
dans lequel l'unité d'éclairage (4) comprend au moins deux sources de lumière (41, 42, 43), qui se distinguent l'une de l'autre par leur couleur de lumière spectrale et/ou leur polarisation,
dans lequel le dispositif comprend en outre une unité d'évaluation (6), qui est conçue pour conclure la présence d'une bulle d'air (1) lors d'une évaluation de la reproduction de l'unité d'enregistrement (5) en raison de l'agencement spécifique des rayons de lumière émis par les sources de lumière (41, 42, 43), pouvant être distingués les uns des autres,
dans lequel le contenant (3) peut être disposé entre l'unité d'éclairage (4) et l'unité d'enregistrement (5) et l'unité d'éclairage (4) et l'unité d'enregistrement (5) sont tournées l'une vers l'autre pour réaliser un éclairage par transmission du contenant (3), et
dans lequel l'unité d'enregistrement (5) est positionnée de telle manière
i) que les rayons de lumière sortant des au moins deux sources de lumière (41, 42, 43) ne pénètrent pas la zone d'enregistrement de l'unité d'enregistrement (5) lors d'un passage du contenant (3), qui est exempt de bulles d'air ou d'autres particules étrangères et sont déviés en direction de l'unité d'enregistrement (5) en rencontrant une bulle d'air (1) ou une particule de verre (81), ou
ii) que les rayons de lumière sortant des au moins deux sources de lumière (41, 42, 43) présentent une intensité continue ou homogène dans la zone d'enregistrement de l'unité d'enregistrement (5) lors d'un passage du contenant (3), qui est exempt de bulles d'air ou d'autres particules étrangères et sont déviés en rencontrant une bulle d'air (1) ou une particule de verre (81) de telle manière qu'il en résulte une augmentation d'intensité, pouvant être détectée par l'unité d'enregistrement (5), de rayons de lumière des au moins deux sources de lumière (41, 42, 43),
dans lequel
les rayons de lumière des au moins deux sources de lumière (41, 42, 43) ne s'étendent pas de manière parallèle l'une par rapport à l'autre dans une zone d'inspection pour le contenant (3).

2. Dispositif selon la revendication 1, dans lequel l'unité d'éclairage (4) comprend trois sources de lumière (41, 42, 43), qui se distinguent par leur couleur de lumière spectrale et/ou leur polarisation.

3. Dispositif selon l'une quelconque des revendications précédentes, dans lequel l'unité d'enregistrement (5) est une caméra couleur et/ou une caméra avec un ou plusieurs filtres de polarisation.

4. Dispositif selon l'une quelconque des revendications précédentes, comprenant en outre une lentille (7), qui est disposée sur le chemin optique de l'unité d'éclairage (4) vers l'unité d'enregistrement (5) et est conçue pour diriger les rayons de lumière des au moins deux sources de lumière (41, 42, 43) de l'unité d'éclairage (4) de manière parallèle à une zone d'inspection d'un contenant (3).

5. Dispositif selon la revendication 4, dans lequel la lentille (7) est une lentille cylindrique, une lentille de type Fresnel et/ou une lentille cylindrique de type Fresnel.

6. Dispositif selon l'une quelconque des revendications précédentes 5 ou 6, dans lequel précisément une des au moins deux sources de lumière (41, 42, 43) est disposée dans le point focal de la lentille (7) et les sources de lumière (41, 42, 43) restantes de l'unité d'éclairage (4) sont disposées de manière espacée de celle-ci sur le même côté de la lentille (7) que la source de lumière disposée dans le point focal.

7. Dispositif selon l'une quelconque des revendications précédentes, dans lequel chacune des au moins deux sources de lumière (41, 42, 43) de l'unité d'éclairage (4) est une lumière linéaire, dans lequel de préférence les directions longitudinales des lumières linéaires sont parallèles les unes par rapport aux autres, ne sont toutefois pas identiques.

8. Dispositif selon la revendication 7, dans lequel les lumières linéaires sont disposées de manière parallèle par rapport à un axe cylindrique d'une lentille cylindrique disposée sur le chemin optique depuis l'unité d'éclairage (4) vers l'unité d'enregistrement (5).

9. Dispositif selon l'une quelconque des revendications précédentes, dans lequel une première des sources de lumière (41) a pour couleur le rouge, une deuxième des sources de lumière a pour couleur le vert (42) et une troisième des sources de lumière (43) a pour couleur le bleu.

10. Dispositif selon l'une quelconque des revendications précédentes, dans lequel le contenant (3) est transparent totalement ou en partie et est de préférence une pointe, un flacon ou une ampoule.

11. Dispositif selon l'une quelconque des revendications précédentes, dans lequel le liquide présent dans le contenant (3) est un liquide (2) transparent.

12. Procédé de détection de bulles d'air (1) dans un contenant (3) rempli de liquide (2) avec un dispositif selon l'une quelconque des revendications précédentes, dans lequel, dans le procédé, :
le contenant (3) est irradié avec une unité d'éclairage (4),
une reproduction du contenant (3) irradié par l'unité d'éclairage (4) est relevée par une unité d'enregistrement (5), et
la reproduction est évaluée au moyen d'une unité d'évaluation (6),
dans lequel le contenant (3) est irradié par au moins deux sources de lumière (41, 42, 43) de l'unité d'éclairage (4), qui se distinguent l'une de l'autre par leur couleur de lumière spectrale et/ou leur polarisation,
dans lequel les rayons de lumière sortant des au moins deux sources de lumière (41, 42, 43) ne s'étendent pas de manière parallèle les uns par rapport aux autres dans une zone d'inspection pour le contenant (3),
dans lequel le contenant (3) peut être disposé entre l'unité d'éclairage (4) et l'unité d'enregistrement (5) et l'unité d'éclairage (4) et l'unité d'enregistrement (5) sont tournées l'une vers l'autre pour réaliser un éclairage par transmission du contenant (3),
dans lequel les rayons de lumière partant des au moins deux sources de lumière (41, 42, 43) :
i) ne pénètrent pas la zone d'enregistrement de l'unité d'enregistrement (5) et sont déviés en direction de l'unité d'enregistrement (5) en rencontrant une bulle d'air (1) ou une particule de verre (81) ou
ii) présentent une intensité continue ou homogène dans la zone d'enregistrement de l'unité d'enregistrement (5) et sont déviés en rencontrant une bulle d'air (1) ou une partie de verre (81) de telle manière qu'il en résulte une augmentation d'intensité pouvant être détectée par l'unité d'enregistrement (5) de rayons de lumière des au moins deux sources de lumière (41, 42, 43)
lors du passage du contenant (3), qui est exempt de bulles d'air ou d'autres particules étrangères,
et dans lequel l'agencement spécifique de rayons de lumière émis par les sources de lumière (41, 42, 43), pouvant être distingués les uns des autres permet de conclure la présence d'une bulle d'air (1) lors de l'évaluation de la reproduction au moyen de l'unité d'évaluation (6).

13. Procédé selon la revendication 12, dans lequel on conclut la présence d'une bulle d'air (1) lorsque la reproduction reflète un agencement spécifique des rayons de lumière émis par les sources de lumière (41, 42, 43), pouvant être distingués les uns des autres, qui correspond à l'ordre d'agencement réel d'un sous-groupe des sources de lumière (41, 42, 43) ou de toutes les sources de lumière (41, 42, 43) dans l'unité d'éclairage (4).
